# EUROPEAN PATENT APPLICATION

(11) **EP 4 814 293 A1**
(43) Date of publication of application: **30.09.2026**
(21) Application number: 25382303.3
(22) Date of filing: 28.03.2025
(51) Int. Cl.: F03D 1/06, F03D 80/50, F03D 80/70

(54) **METHOD AND SYSTEM FOR DISASSEMBLING A TENSIONING SYSTEM**

(71) Applicant: Nordex Energy Spain, S.A.U., 31395 Barasoain (Navarra) (ES)
(72) Inventor: PASCUAL RESANO, Javier, 31395 Barasoain (ES); ECHARRI LATASA, Román, 31395 Barasoain (ES); AZANZA LADRÓN, Carlos, 31395 Barasoain (ES); ARÍSTEGUI LANTERO, Jose Luis, 31395 Barasoain (ES)
(74) Representative: Epping - Hermann - Fischer

(57) **Abstract**

A method for disassembling a tensioning system (320) from a bearing (200) of a wind turbine (100) is disclosed. The tensioning system (320) comprises an elongated, flexible tensioner (331), the tensioner (331) being wrapped around the bearing (200) and fixed by a retaining device (341). The method comprises:
- cutting the tensioner (331) in a cutting region (521) of the tensioner (331), and
- removing the tensioner (331) from the bearing (200). A system for disassembling a tensioning system is also disclosed.

## Description

The disclosure relates to a method for disassembling a tensioning system from a bearing of a wind turbine, in particular using a system as disclosed herein. The disclosure relates to a system for disassembling a tensioning system from a bearing of a wind turbine, in particular by using a method as disclosed herein.

A wind turbine may include a rotor that includes a rotatable rotor assembly having multiple rotor blades. The rotor blades transform wind energy into a drive torque that drives the generator of the wind turbine via a drive train.

In occasions, it is desirable to provide a method for disassembling a tensioning system from a bearing of a wind turbine and to provide a system for disassembling a tensioning system from a bearing of a wind turbine, each of which provides a reliable operation.

Embodiments of the disclosure provide a method for disassembling a tensioning system from a bearing of a wind turbine. Embodiments of the disclosure provide a system for disassembling a tensioning system from a bearing of a wind turbine. Advantages, features and developments which are described in connection with the method also apply to the system and vice versa.

According to some embodiments the tensioning system comprises an elongated, flexible tensioner. The tensioner is wrapped around the bearing and fixed by a retaining device under tension.

According to an embodiment, the method comprises:
- cutting the tensioner in a cutting region of the tensioner, and
- removing the tensioner from the bearing.

Cutting through the tensioner allows it to be removed without the tensioner having to be slackened first, for example. In particular, the tensioner does not have to be removed from the retaining device in order to be removed from the bearing. Removal is reliable and can be carried out flexibly, as cutting can be carried out at various points on the tensioner. In some embodiments, this avoids the need for a specific point on the tensioner and/or the retaining device to be accessible for the removal.

According to some embodiments, cutting is carried out with a cutting tool. The cutting tool comprises, for example, a cutting blade and/or a cutting disc and/or a cutting saw. For example, the cutting tool is a grinder with a cutting disc or a circular saw.

According to some embodiments, the cutting region extends 40 cm or less, for example 30 cm or less, along the tensioner starting at the retaining device. The tensioner is cut within the cutting region near the tensioner. In particular, this is useful if only one tensioner or not all of a plurality of tensioners is cut. For example, a single tensioner or two tensioners which are anchored to parallel retaining devices are cut. Near the tensioning device, the tensioner protrudes above other tensioners that are not anchored at the retaining devices. In the cutting region, which protrudes and is close to the retaining device, the tensioner is accessible all round and spaced from other tensioners. The anchored tensioner can be reached by the cutting tool at the protruding cutting region without damaging the other tensioners. Thus, unwanted damage of the other tensioners is avoided.

According to some embodiments, the method comprises:
- providing a first guide, wherein the first guide is configured to hold the tensioner,
- attaching the first guide to the bearing next to the cutting region. The guide is configured to hold the tensioner securely in the desired position and prevents unintentional detachment of the tensioner. For example, the guide counteracts the inherent rigidity of the tensioner. For example, the guide prevents the tensioner from unintentionally detaching from the bearing. For example, the guide prevents the tensioner from falling into a place that is difficult to reach after cutting. The guide enables controlled removal of the tensioner after cutting.

According to some embodiments, the method comprises:
- providing a second guide, wherein the second guide is configured to hold the tensioner,
- attaching the second guide to the bearing such that the cutting region is between the first guide and the second guide. In particular, this is useful if all tensioners on the bearing are cut. The cutting region between the two guides prevents uncontrolled detachment of the tensioner from the bearing due to the tension. This protects a worker who cuts through the tensioner.

According to some embodiments, the method comprises providing a third guide, wherein the third guide is configured to hold the tensioner at the bearing after the cutting and before the removing of the tensioner from the bearing. For example, the third guide prevents the tensioner from unintentionally detaching from the bearing. For example, the third guide prevents the tensioner from falling into a place that is difficult to reach after cutting. The third guide enables controlled removal of the tensioner after cutting.

According to some embodiments, the first guide is attached to the bearing with a bolt that is used for attaching the bearing to a rotor hub of the wind turbine. This enables simple and cost-effective installation. According to some embodiments, the second guide is attached to the bearing with a bolt that is used for attaching the bearing to a rotor hub of the wind turbine. According to some embodiments, the third guide is attached to the bearing with a bolt that is used for attaching the bearing to a rotor hub of the wind turbine.

According to some embodiments, the first guide is attached to a reinforcement plate which is fixed to the bearing. For example, the reinforcement plate is provided for increasing the stiffness of the bearing locally. For example, the reinforcement plate is fixed to a first bearing ring of the bearing via a bolt connection. For example, the first bearing ring is an outer bearing ring. For example, the first bearing ring is attached to a wind turbine component, like the rotor hub. A second bearing ring of the bearing is attached to a second wind turbine component, like a rotor blade. The first bearing ring and the second bearing ring can be rotated relative to each other.

According to some embodiments, the retaining device and the further retaining device are attached to each other prior to cutting the tensioner and/or the further tensioner.

According to some embodiments, the method comprises:
- providing a tying element,
- wrapping the tying element around the retaining device and the further retaining device, and
- attaching the retaining device and the further retaining device to each other with the tying element.

For example, the tying element comprises or consists of a cable tie. For example, a plurality of tying elements is used to attach the two retaining devices together.

According to some embodiments, the tensioning system comprises a plurality of elongated, flexible tensioners. According to some embodiments, the method comprises:
- determining a damage to one tensioner of the plurality of tensioners,
- cutting all tensioners of the plurality of tensioners, and
- removing all tensioners of the plurality of tensioners from the bearing. For example, if only one tensioner is damaged, the other tensioners probably have been overloaded, so it may be useful to cut and remove all of the tensioners.

According to some embodiments, the tensioner is cut and removed from the bearing while the rotor hub and the rotor blade are arranged on a tower of the wind turbine. The method is carried out in particular while the rotor is at the top of the tower. The procedure is carried out in particular while the rotor is mounted on the rotor shaft. It is not necessary to remove the rotor from the operating position and place it on the ground to carry out the procedure.

According to an embodiment, it is provided a system for disassembling a tensioning system from a bearing of a wind turbine, the tensioning system comprising an elongated, flexible tensioner, the tensioner being wrapped around the bearing and fixed by a retaining device and comprising a cutting region, the system comprising:
- a cutting tool, the cutting tool being configured to cut the tensioner.

In particular, the cutting tool is a portable cutting tool that can be transported to the top of the tower into the nacelle and to the rotor hub. The cutting tool comprises, for example, a cutting blade and/or a cutting disc and/or a cutting saw. For example, the cutting tool is a grinder with a cutting disc or a circular saw. The cutting tool enables the tensioner to be cut through while the rotor is mounted on the rotor shaft.

According to some embodiments, the system comprises a first guide. The first guide is configured to be attached to the bearing next to a cutting region and to hold the tensioner.

According to some embodiment, the system comprises a second guide. The second guide is configured to be attached to the bearing next to the cutting region and to hold the tensioner such that the cutting region is between the first guide and the second guide.

According to some embodiment, the system comprises a third guide. The third guide is configured to be attached to the bearing and to hold the tensioner at the bearing after the cutting and before the removing of the tensioner from the bearing.

For example, at least one of the first, the second, and the third guide is configured to prevent the tensioner from unintentionally detaching from the bearing. The at least one of the first, the second, and the third guide is configured to prevent the tensioner from falling into a place that is difficult to reach after cutting. The at least one of the first, the second, and the third guide is configured to prevent the tensioner from unintentionally detaching from the bearing. The at least one of the first, the second, and the third guide enables controlled removal of the tensioner after cutting. Additionally or alternatively, the at least one of the first, the second, and the third guide prevents uncontrolled detachment of the tensioner from the bearing due to the tension of the tensioner. This protects a worker who cuts through the tensioner.

For example, a distance between two directly adjacent guides is in a range between 15 and 5 bolts, between 12 and 7 bolts, or 10 bolts, 9 bolts, or 8 bolts. For example, a distance between two directly adjacent guides is in a range between 60° and 20°, between 48° and 28°, or 36° +/- 15%.

According to some embodiment, at least one of the first, the second, and the third guide is configured to be attached to the bearing with a bolt that is used for attaching the bearing to a rotor hub of the wind turbine. This enables simple and cost-effective installation.

According to some embodiment, at least one of the first, the second, and the third guide is configured to be attached to a reinforcement plate which is fixed to the bearing. This enables simple and cost-effective installation. For example, the reinforcement plate is configured to be fixed to the first bearing ring of the bearing via a bolt connection.

According to some embodiment, the system comprises a tying element. The tying element is configured for being wrapped around the retaining device and a further retaining device and configured to attach the retaining device and the further retaining device to each other. For example, the tying element comprises or consists of a cable tie. According to some embodiments, the comprises a plurality of tying elements. The tying elements of the plurality of tying elements are configured to attach the two retaining devices together.

Embodiments of the present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic view of a tensioning system according to an embodiment.
Figure 3 is a schematic view of a rotor hub with tensioning systems according to an embodiment.
Figures 4 to 8 are schematic views of details of a guide in a mounted state according to embodiments.
Figure 9 is a schematic view of a system for disassembling according to an embodiment.
Figure 10 shows retaining devices according to an embodiment.
Figure 11 is a schematic view of a rotor hub with a tensioning system and additional guides according to an embodiment.
Figures 12 and 13 are schematic views of cutting regions according to embodiments.
Figure 14 is a flowchart of a method according to an embodiment.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents and alternatives falling within the scope of the invention as defined by the appended claims.

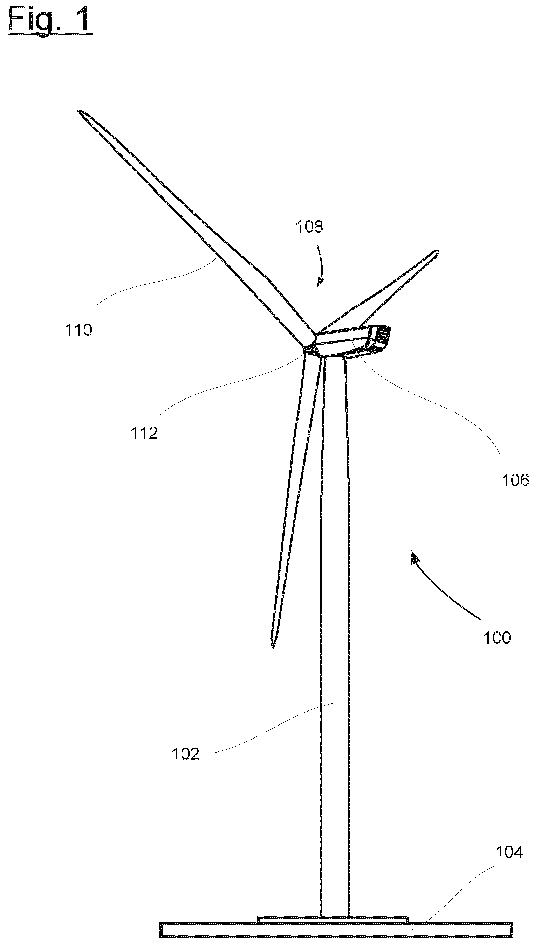

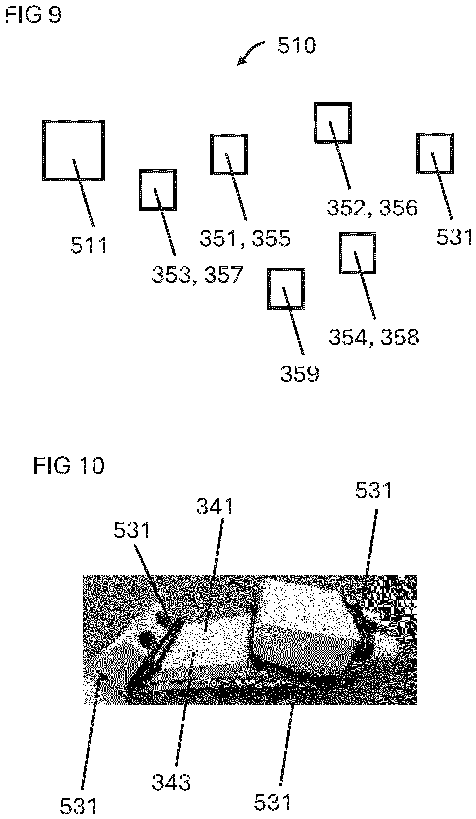

As shown in Figure 1, a wind turbine 100 comprises a tower 102. The tower 102 is connected to a foundation 104 fixed to the ground. Specifically, the foundation 104 may be formed at a predetermined depth inside the ground, which is reinforced by a composite structure, for example a concrete support. A nacelle 106 is arranged on a top of the tower 102 opposite the foundation 104. The nacelle 106 houses the drive train among other components and subassemblies. Inside the nacelle 106, for example, a generator is arranged that is connected to a rotor 108 via the drive train. The drive train may comprise, for example, a gearbox and a rotor shaft 114 (Figure 9). The rotor 108 comprises rotor blades 110. The rotor blades are rotatably mounted on a rotor hub 112. The rotor hub 112 is connected to the rotor shaft 114.

For example, the rotor 108 is driven by an airflow interaction of moving wind with the rotor blades 110 of the rotor 108. During operation, for example, the wind mainly comes in along a main wind inflow direction 113 (Figure 9). For example, a distal end of the rotor hub faces the main wind inflow direction, which can also be called "upwind side". The distal end is positioned opposite the end on which the rotor shaft 114 is mounted.

The rotational movement of the rotor 108 is transmitted via the drive train to the generator. The generator converts the mechanical output of the rotor 108 into electrical energy. By rotating the rotor blades 110 relative to the hub 112, the load on the rotor may be controllable. The rotor blades 110 are configured to be pitched in and out of the wind in order to modulate the energy capture as wind decreases or increases. The rotor blades 110 are pitchable to adapt the output or to protect the wind turbine from damaging overloads.

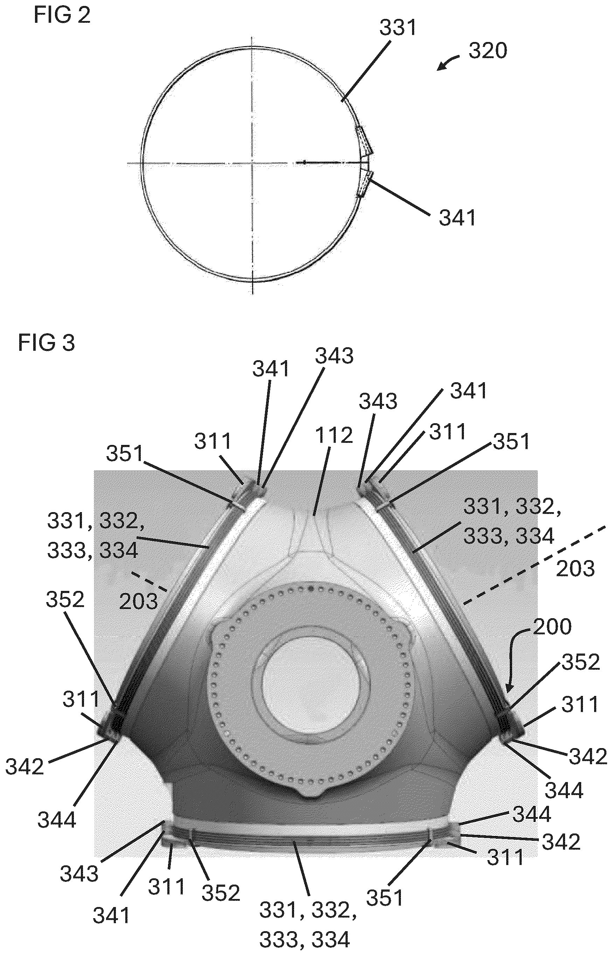

To perform the pitch control, each rotor blade 110 is provided with a pitch bearing 200 as shown for example in Figures 3 to 10. The pitch bearing 200 is located generally between the rotor hub 112 and the respective rotor blade 110.

A mechanism, for example a hydraulic cylinder or an electric motor, provides the necessary energy and force for pitching the respective rotor blade 110.

The pitch bearing 200 is an example of a bearing 200 that may be used in the wind turbine 100. The following disclosure may also be correspondingly used with other bearings, like a yaw bearing.

The bearing 200 comprises a first bearing ring 210 and a second bearing ring 220. The first bearing ring 210 is attached to a wind turbine component, like the rotor hub 112. The second bearing ring 220 is attached to a second wind turbine component, like the rotor blade 110. The bearing 200 may be a rolling element bearing, like a ball bearing. Bearing elements may be arranged between the first bearing ring 210 and the second bearing ring 220 to enable relative rotation between the first bearing ring 210 and the second bearing ring 220 around an axis 203 (Figure 3).

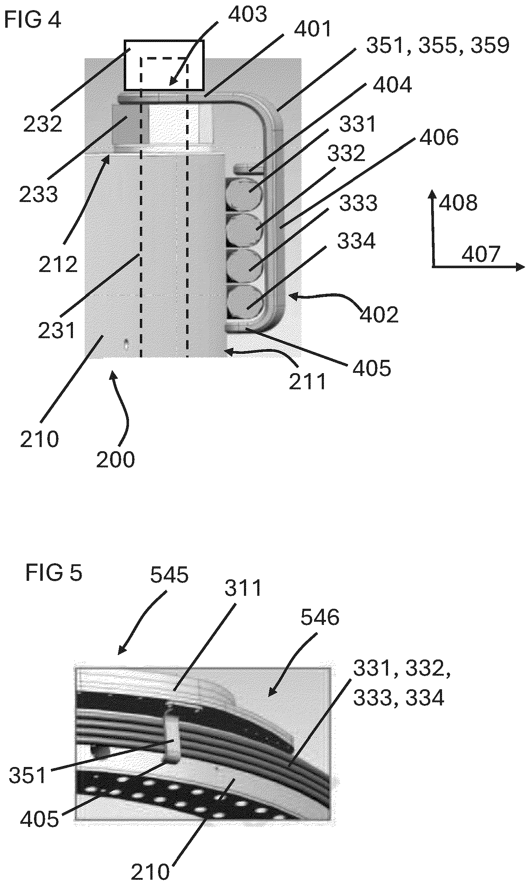

As for example shown in Figure 4, the first bearing ring 210 comprises an outer surface 211 facing radially outwards. In particular, the outer surface 211 faces away from the second ring 220.

The first bearing ring 210, which for example is connected to the rotor hub 112, comprises a first surface 212 facing axially, for example parallel to the axis 203 through the centre of bearing ring 210. The first bearing ring 210 comprises a second surface which also faces axially. The first surface 212 and the second surface are arranged opposite each other. In particular, the first surface 212 may face the rotor blade 110 and the second surface may face the rotor hub 112. The second surface may be arranged nearer to the hub 112 than the first surface 212. The first surface 212 is arranged more proximate to the rotor blade 110 than the second surface. The outer surface 211 connects the first surface 212 and the second surface.

An embodiment of a tensioning system 320 may be provided to reinforce the bearing 200.

The tensioning system 320 may be coupled to the bearing 200, in particular connected to the first bearing ring 210, in particular on the outer surface 211. The tensioning system 320 may provide compression forces and/or stiffness to the first bearing ring 210 to reinforce and stabilize the first bearing ring 210 at least locally and thus the bearing 200. The tensioning system 320 may enable the use of a more lightweight bearing 200 for the same wind forces and/or to reinforce an existing bearing 200 which, for example, is damaged. Thus, the tensioning system 320 may be retrofittable to existing bearings 200.

Figure 2 schematically shows an example of the tensioning system 320.

The tensioning system 320 comprises one tensioner 331 or more tensioners 331 - 334. For example, the tensioning system 320 comprises exactly two tensioners 331, 332. For example, the tensioning system 320 comprises exactly four tensioners 331, 332, 333, 334. The tensioners can each be at least one of a cable, a belt, a strand, a rope, and any other elongated, flexible element that can withstand the forces that occur.

The tensioning system 320 further comprises one retaining device 341 or a plurality of retaining devices 341, 342, 343, 344.

One tensioner 331, for example, is coupled with one retaining device 341. The tensioner 331 and the retaining device 341 are configured such that the tensioner 331 is fixed to the retaining device 341 under tension. The retaining device 341 is configured to hold the tensioner 331 under tension. The tensioning system 320, in particular the tensioner 331 and the retaining device 341, is arranged at the outer surface 211 of the first bearing ring 210. For example, the tensioning system 320 is arranged nearer to a first surface 211 than to an opposite second surface of the first bearing ring 210.

For example, the tensioning system 320 is configured to completely surround the first bearing ring 210 at the outer surface 211 by 360°.

A tensioning force may be applied to the tensioner 331 such that compression forces act radially inwards on the first bearing ring 210. For example, the tensioning force is applied by a tensioning device. The tensioning device comprises for example a hydraulic tensioning device and/or a mechanical tensioning device.

The tensioning force for each of the tensioners 331 to 334 may be, for example, greater than 50 kN, greater than 80 kN, greater than 90 kN, greater than 100 kN, less than 350 kN, in a range of between 75 kN and 250 kN, in a range of between 80 kN and 250 kN, in a range of between 90 kN and 250 kN, in a range of between 100 kN and 250 kN, in a range of between 125 kN and 200 kN, in a range of between 125 kN and 175 kN. For example, the tensioning force 322 may be 150 kN.

The retaining device 341 to 344 is configured to fix the tensioner 323, 324 such that the compression forces are maintained. Since the tensioning system 320 may surround the first bearing ring 210, the compression forces act along the entire outer surface 211.

The compression forces may differ along the outer surface 211, for example due to friction. It is possible to arrange the retaining devices such that a region or a plurality of regions in which the compression force is highest is/are at desired region/s of the outer surface 211, for example in an upwind area.

For example, the level of the compression forces of the first bearing ring 210 may be specified by the maximum tensioning force that can be applied to the tensioners 331 to 334. But also, the effect of that level of the compression forces in the bearing ring stresses and the bearing raceways may need to be considered. For example, the level of the tensioning force is set dependent on the type of the bearing 200.

Figure 3 shows the rotor hub 112 with three tensioning systems 320. The rotor hub 112 is configured to be coupled to three rotor blades 110. Three bearings 200 are mounted to the rotor hub 112, one bearing 200 for each rotor blade 110. One tensioning system 320 is provided for each bearing 200. For example, the tensioning systems 320 are each provided so that they correspond to each other in the same way. One tensioning system 320 is therefore described below, whereby the disclosure also applies to the other tensioning systems 320.

The tensioning system 320 comprises four tensioner 331 to 334. The tensioning system 320 comprises four retaining devices 341 to 344. Two retaining devices 341, 343; 342, 344 are arranged directly next to each other. Two retaining devices 341, 343 are arranged opposite the other two retaining devices 342, 344.

According to some embodiments, reinforcement plates 311 may be attached to the first bearing ring 210 to reinforce the first bearing ring 210. According to other embodiments, the reinforcement plates may be omitted.

The reinforcement plates 311 may increase the stiffness of the first bearing ring 210 locally. For example, the reinforcement plates 311 are fixed to the first bearing ring 210 via bolt connection. The reinforcement plates 311 for example are stacked to form a plate stack.

The reinforcement plates 311 may be made of a metal, for example steel or iron. The reinforcement plates 311 may be mounted in places of the first bearing ring 210 where reinforcement is required locally, for example where the bearing ring is damaged, for example by a crack. Alternatively, or in addition, the reinforcement plates 311 may be mounted in places of the first bearing ring 210 where reinforcement is required locally, for example on a side which is positioned upwind. Alternatively, or in addition, the reinforcement plates 311 may be mounted in places of the first bearing ring 210 where reinforcement is required locally, for example in an area of a recess for introducing the bearing elements.

For example, two plate stacks of reinforcement plates 311 are provided at the bearing 200 as shown in Figure 3. The two retaining devices 341, 343 are arranged directly next to one of the plate stack and the other two retaining devices 342, 344 are arranged directly next to the other plate stack.

The tensioning system 320 may further comprise guides 351, 352. According to embodiments, the tensioning system 320 comprises one guide 351 or a plurality of guides 351 to 354. The guides 351 to 354 are each configured to hold the tensioners 331 to 334 to the outer surface 211 of the first bearing ring 211 during operation of the wind turbine. The guides 351 to 354 are each configured to hold one single tensioner 331 or a plurality of tensioners 331 to 334, for example four tensioners 331 to 334.

The guides 351 to 354 are attached to the first bearing ring 210. The guides 351 to 354 extend over a part of the outer surface 211. The tensioners 331 to 334 are arranged between the outer surface 211 and the guides 351 to 354 along a radial direction. The tensioners 331 to 334 are configured to prevent shifting and/or slipping of the tensioners 331 to 334 along the outer surface 211 during operation of the wind turbine.

Figure 4 schematically shows the guide 351 according to an embodiment. The other guides 352 to 354 may be provided with the same design or may be designed differently.

The guide 351 comprises a fixing part 401 which extends at least partly along the first surface 212 of the first bearing ring 210. The fixing part 401 is followed by a holding part 402. The fixing part 401 and the holding part 402 are aligned approximately perpendicular to each other. The holding part 402 extends at least partly along the outer surface 211.

The fixing part 401 is configured fix the guide 351 to the bearing 200. The fixing part 401 comprises an opening 403. A bolt 231 extend through the opening 403. For example, the bolt 231 is a bolt to attach the first bearing ring 210 to the rotor hub 112. A nut 233 is screwed onto the bolt 231 to fasten the first bearing ring 210 and the rotor hub 112 together. The fixing part 401 is placed on the bolt 231, over the existing nut 233, and the additional nut 232 is tightened over the fixing part 401.

The fixing part 401 of the guide 351 is mounted on the bolt 231 such that the nut 233 is between the fixing part 401 and the first surface 212 of the first bearing ring 210. A further nut 232 is screwed onto the bolt 231 to fix the guide 351 to the bolt 231 and thus to the first bearing ring 210. The fixing part 401 is mounted on the bolt 231 such that the fixing part 401 is between the nut 233 and the further nut 232.

The holding part 402 is configured to hold the tensioners in place during assembly and operation. For example, the holding part 402 prevents the tensioner 334 to 334 from detaching from the first bearing ring 210 during assembly before they are fastened in the retaining devices 341 to 344.

The holding part 402 may comprise a first projecting part 404 and a second projecting part 405. The first projecting part 404 and the second projecting part 405 project each from a lateral holding part 406 along a radial direction 407. The first projecting part 404 and the second projecting part 405 project each from the lateral holding part 406 towards the outer surface 211. The second projecting part 405, for example, is in contact with the outer surface 211 to support itself.

The lateral holding part 406 extends along the outer surface 211 such that the tensioners 331 to 374 are arranged between the outer surface 211 and the lateral holding part 406. The lateral holding part 406 hold the tensioners 331 to 334 toward the outer surface 211 along the radial direction 407, in particular during assembly of the tensioning system 320.

The tensioners 331 to 334 are arranged between the first projecting part 404 and the second projecting part 405 along an axial direction 408. The axial direction extends along the perpendicular to the radial direction 407.

The tensioners 331 to 344 are hold in position relative to the first bearing ring 210 by the outer surface 211 and the lateral holding part 406 as well as by the first projecting part 404 and the second projecting part 405.

The tensioners 331 to 334 are arranged next to each other along the axial direction 408. According to some embodiments, the maximum height of the tensioners 331 to 334 together is greater than 50 of the bearing height along the axial direction 108, greater than 10%, greater than 20%, greater than 30%, greater than 40%, greater than 50%, greater than 60%, greater than 70%, greater than 80%, greater than 90%, 100%, between 10% and 100%, between 10% and 50% of the bearing height.

Figure 5 schematically shows the guide 351 according to a further embodiment. The functionality of the guide 351 according to Figure 5 is the same as the functionality of the guide 351 according to Figure 4. In contrast, the guide 351 according to Figure 5 is not fixed to the first bearing by the bolt 321 and the nut 323. The guide 351 according to

Figure 5 is directly attached to the reinforcement plate 311. The guide 351 integrated into the reinforcement plate 311.

The guide 351 is mounted and fixed on the reinforcement plate 311 which is in direct contact with the first surface 212 of the first bearing ring 210. The guide 351 is attached together with the reinforcement plate 311 to the first bearing ring 210. The guide 351 reaches over the tensioners 311 to 334 along the axial direction 408. For example, the reinforcement plate 311 is mounted on the first bearing ring 210 by bolts 231 that are used for mounting the first bearing ring 310 to the rotor hub 112. The guide 351 is attached to the reinforcement plate 311 such that the guide 351 is fixed relative to the first bearing ring 210.

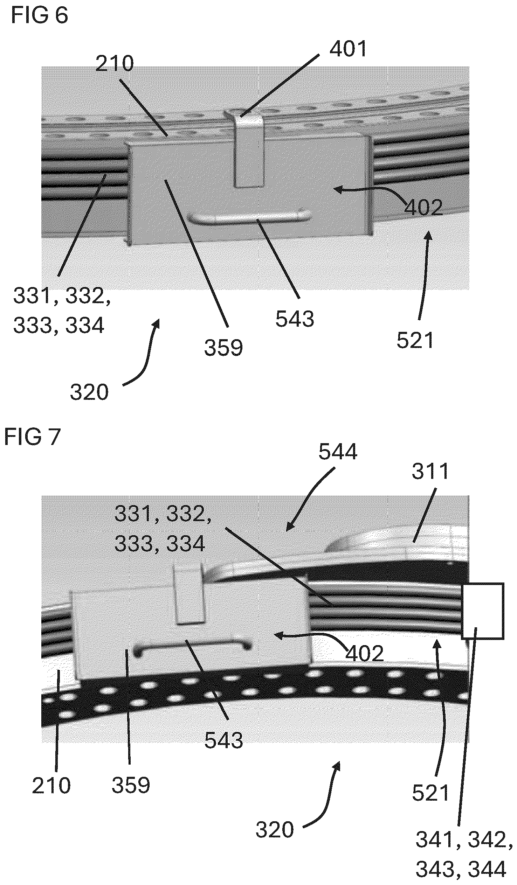

Figures 6 and 7 schematically show each a guide 359 according to an example. The functionality of the guide 359 according to Figures 6 and 7 is like the functionality of the guide 351 according to Figure 4. In contrast, the holding part 402 is elongated along the tensioners 331 to 334. A handle 543 is arranged at the holding part 402. The handle 543 is used, for example, to hold a worker in place. Alternatively or in addition, the handle 543 is used to handle the holding part 402 and the specific example of the guide 359 as shown in Figure 6.

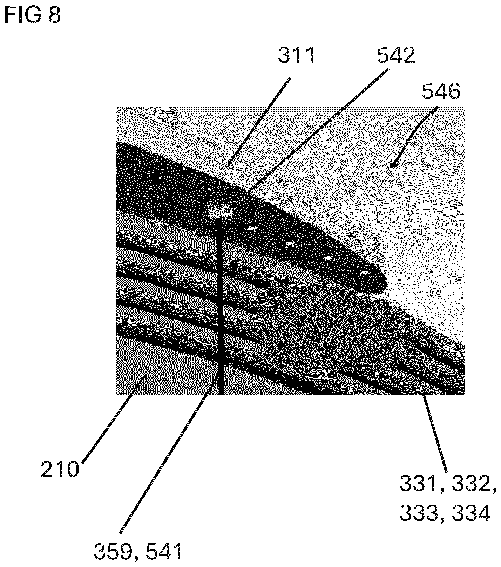

Figure 8 schematically shows the guide 359 according to an example. The functionality of the guide 359 according to Figure 8 is like the functionality of the guide 351 according to Figure 4 and Figure 5. The guide 359 according to the example of Figure 8 is realized by a threaded rod 541. The threaded rot 541 is fixed to the reinforcement plate 311, for example by a guide nut 542.

In Figures 6 to 8, the retaining device 341 can be located at the right of the guide 359. The type of guide 351, 359 used is for example dependent on the position of the retaining device 341 with respect of the reinforcement plates 311. For example, if the guide 351, 359 is to be attached at the left end of the reinforcement plates 311 because of the location of the retaining device 341 at the right, the threaded rod 541 is used, because the threaded rod 541 can be attached to the available holes in the reinforcement plates 311. This makes it possible to reliably secure the tensioners 331 to 334 during cutting, even when there is little installation space available. The type of the guide 351, 359, the number of guides 351, 359 and the location where it is fixed is for example dependent on the available installation space. The purpose and use of the guides 351, 359 in connection with the disassembling of the tensioners 331 to 334 is also explained below. For example, the guide 359 is located between as close as possible to the reinforcement plates 311, but always on the side closer to the nacelle.

Figure 9 schematically shows a system 540 for disassembling one tensioner or a plurality of tensioners of the tensioners 331 to 334.

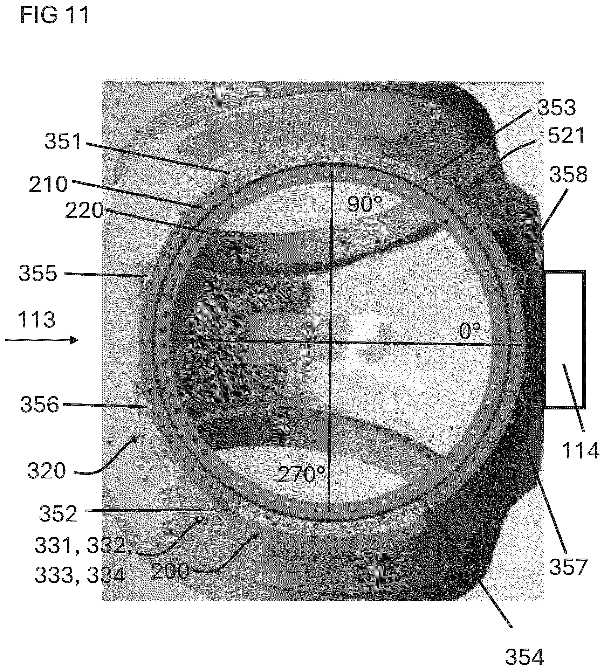

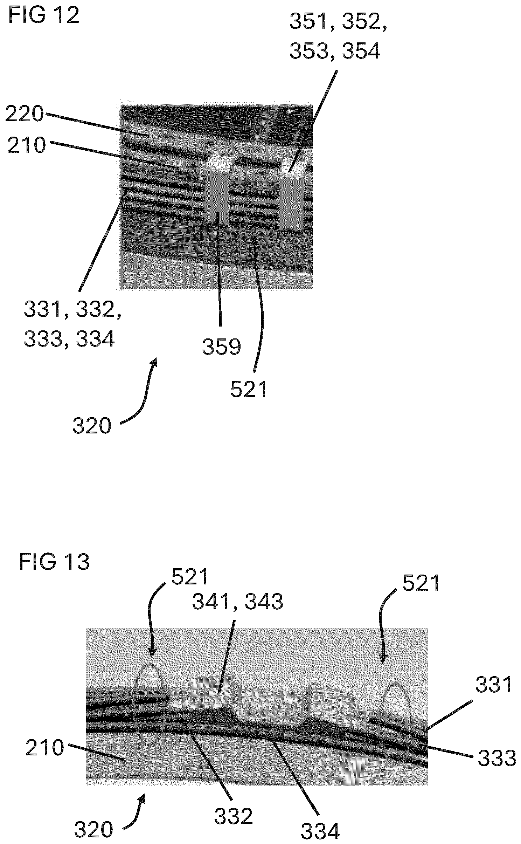

For example, the system comprises five additional guides 355, 356, 357, 358, 359 that can be attached to the first bearing ring 210. For example, the system comprises four additional guides 355, 356, 357, 358 that can be attached to the first bearing ring 210 (Figure 11). For example, the system comprises only one single additional guide 359 (Figure 12). The additional guide 335 or the plurality of additional guides 355 to 359 may be of the types and designs of the respective guides shown in Figures 4 to 8.

For example, the additional guides 355 to 359 can be attached to the first bearing ring 210 in addition to the guides 351 to 354 that were already attached to the first bearing ring 210 when the tension system 320 was installed to the bearing 200. Thus, prior to cutting the tensioner or the plurality of tensioners of the tensioners 331 to 334, for example, nine guides 351 to 359 are attached to the first bearing ring 210. The additional guides 355 to 359 for example serve to prevent the tensioner or the plurality of tensioners of the tensioners 331 to 334 from falling into a place that is difficult to reach after cutting. The additional guides 335 to 359 are configured to prevent the tensioner or the plurality of tensioners of the tensioners 331 to 334 from unintentionally detaching from the bearing 200. The additional guides 335 to 339 are configured to prevent uncontrolled detachment of the tensioner or the plurality of tensioners of the tensioners 331 to 334 from the bearing 200 due to the tension of the tensioner or the plurality of tensioners of the tensioners 331 to 334. This protects a worker who cuts through the tensioner or the plurality of tensioners of the tensioners 331 to 334.

The system 510 comprises a cutting tool 511 for cutting the tensioner or the plurality of tensioners of the tensioners 331 to 334. The tensioner or the plurality of tensioners of the tensioners 331 to 334 are cut for disassembling the tensioner or the plurality of tensioners of the tensioners 331 to 334 from the bearing 200. The cutting tool 511 comprises, for example, a cutting blade and/or a cutting disc and/or a cutting saw. For example, the cutting tool 511 is a grinder with a cutting disc or a circular saw.

The system 510 comprises a tying element 531 or a plurality of tying elements 531. The tying elements 531 for example are each a cable tie. The tying elements 531 are each configure to attach two retaining devices 341, 343 together, as shown in Figure 10 for example.

Figure 10 shows two directly adjacent retaining devices 341, 343 that are fixed to each other by the tying elements 531 prior to the cutting of the tensioner or the plurality of tensioners of the tensioners 331 to 334. For example, eight tying element 531 are used to join the two retaining devices 341, 343 together.

Figure 11 schematically shows the rotor hub 112 with the bearing 200 and four additional guides 355 to 358. The additional guides 355 to 358 are attached to the first bearing ring 210 in addition to the guides 351 to 354. For example, all guides 351 to 358 are of the same type and design. For example, different types and designs are used. The additional guides 355 to 358 serve to hold the tensioner 331 to 334 on the bearing 200 after cutting. The additional guides 355 to 358 prevent that the tensioner 331 to 334 will fall uncontrolled after the cutting, which would make it difficult to remove the tensioner 331 to 334.

For example, two additional guides 355, 356 are attached to the first bearing ring 210 with their center in a region at 180°. The 0° reference point is where the center of the rotor shaft 114 is arranged. For example, nine studs for a bolt connection between the first bearing ring 210 and the rotor hub 112 are between the two additional guides 355, 356.

For example, two further additional guides 357, 358 are attached to the first bearing ring 210 with their center in a region at 0°. For example, nine studs for a bolt connection between the first bearing ring 210 and the rotor hub 112 are between the two further additional guides 357, 358.

A cutting area 521 where the tensioner 331 to 334 is to be cut is, for example, next to the reinforcement plates 311 on the side closer to the nacelle. For example, the cutting area 521 is between guide 353 and guide 358. For example, the cutting area 521 is between guide 354 and guide 357. Other locations for cutting area 521 are possible, in particular locations that are sufficiently accessible with the cutting tool 511.

Figure 12 schematically shows an example with one additional guide 359. In particular, if the location where the tensioner 331 to 334 is to be cut is limited, the fifth guide 359 is mounted next to one of the guides 351 to 354 that are already installed. For example, one stud for a bolt connection between the first bearing ring 210 and the rotor hub 112 is between the guide 351 to 354 and the additional guide 359. The tensioner 331 to 334 is cut in the cutting region 521 between the guide 351 to 354 and the additional guide 359.

The arrangements of Figure 12 are in particular useful if all tensioners 331 to 334 are to be cut.

Figure 13 schematically shows an arrangement for the case that not all tensioner 331 to 334 are to be cut. A particular tensioner 331 or a plurality of particular tensioners 331, 333 can be cut in the cutting region 521 according to Figure 13.

The cutting region 521 is defined next to the retaining devices 341, 343. For example, the cutting region 521 extends 40 cm along the tensioner 331, 333 starting at the retaining device 341. For example, the cutting region 521 extends 30 cm along the tensioner 331, 333 starting at the retaining device 341. For example, the cutting region 521 extends 25 cm along the tensioner 331, 333 starting at the retaining device 341. For example, the cutting region 521 extends 20 cm along the tensioner 331, 333 starting at the retaining device 341. For example, the cutting region 521 extends 15 cm along the tensioner 331, 333 starting at the retaining device 341. For example, the cutting region 521 extends 10 cm or less along the tensioner 331, 333 starting at the retaining device 341.

For example, the cutting region 521 extends over five studs along the tensioner 331, 333 starting at the retaining device 341. For example, the cutting region 521 extends over four studs along the tensioner 331, 333 starting at the retaining device 341. For example, the cutting region 521 extends over three studs along the tensioner 331, 333 starting at the retaining device 341.

The tensioner 331 to be cut is easily accessible in the cutting area 521 directly next to the retaining device 341, 343, as it is positioned at a distance from the other tensioners 332, 333, 334. As shown in Figure 13, the cutting area 521 can be provided on the left or right or on both sides of the retaining device 341, 343.

For example, the guide 359 as shown in Figure 6 is used for cutting one tensioner 331, in particular if the retaining device 341, 343 is arranged spaced apart from the reinforcement plate 311 or if no reinforcement plate 311 is provided. It may be useful to arrange the guide 359 near to the retaining device 341, 343.

For example, the guide 359 as shown in Figure 7 is used for cutting one tensioner 331, in particular if the retaining device is arranged next to the reinforcement plate 311 (as shown in Figure 3).

For example, the guide 351 attached to a central part 545 of the reinforcement plate 311 as shown in Figure 5 is used for cutting one tensioner 331, in particular if the retaining device is arranged next to the reinforcement plate 311 (as shown in Figure 3).

For example, the guide 359 attached to right part 546 of the reinforcement plate 311 as shown in Figure 8 is used for cutting one tensioner 331, in particular if the retaining device is arranged next to the reinforcement plate 311 (as shown in Figure 3). For example, the guide 359 is attached to a left part 544 of the reinforcement plate. The central part 545 is between the left part 544 and the right part 546. The assignment of "left" and "right" refers to the illustration in Figures 5, 7 and 8.

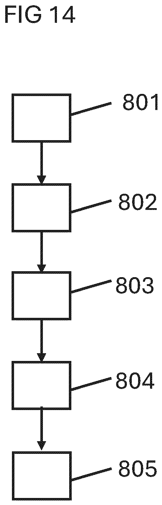

Figure 14 shows a flowchart of a method for disassembling the tensioning system 320 from the bearing 200. In particular, the method is carried out using a system 510 for dissembling as described herein. It is not necessary to carry out all the steps described below; one or more steps can be omitted, for example step 802, if the two retaining devices 341, 343 were already attached to each other before. The sequence of the steps can be changed where appropriate, for example the sequence of step 801 and 802.

In a step 801, the desired and required number of additional guides 355 to 359 is provided and mounted to the first bearing ring 210. For example, one additional guide 359 is provided and mounted. For example, four additional guides 355 to 358 are provided and mounted. The additional guides 355 to 359 may also be referred to as first guide, second guide, and/or third guide.

In a step 802, the two retaining devices 341, 343 that are arranged next to each other and are contacting each other are attached to each other. This is carried out in particular if the two retaining devices 341, 343 were not previously attached to each other. In particular, the tying elements 531 are used to mount the retaining devices 341, 343 together.

In a step 803, the desired and intended number of tensioners 331 to 334 are cut, in particular using the cutting tool 511. For example, incorrect installation and/or damage to one tensioner or more tensioners of the tensioners 331 to 334 is determined and dependent thereon the number of tensioners 331 to 334 to be cut is determined. For example, one tensioner 331 is cut. For example, two tensioners 331, 332 are cut. For example, three tensioners 331, 332, 333 are cut. For example, four tensioners 331, 332, 333, 334 are cut. For example, all tensioners 331, 332, 333, 334 are cut.

In a step 804, the cut tensioner or the cut tensioners 331, 332, 333, 334 are removed from the bearing. For example, the corresponding retaining device 341 or the corresponding retaining devices 341, 342, 343, 344 are removed, too. For example, the retaining devices 341, 342, 343, 344 are kept and reused.

In a step 805, the additional guide 359 or the additional guides 355 to 358 of step 801 are removed from the first bearing ring 210.

### References

100 wind turbine
102 tower
104 foundation
106 nacelle
108 rotor
110 rotor blade
112 rotor hub
113 main wind inflow direction
114 rotor shaft
200 bearing
203 axis
210 first bearing ring
211 outer surface
212 first surface
220 second bearing ring
231 bolt
232, 233 nut
311 reinforcement plate
320 tensioning system
331 - 334 tensioner
341 - 344 retaining device
351 - 359 guide
401 fixing part
402 holding part
403 opening
404 first projecting part
405 second projecting part
406 lateral holding part
407 radial direction
408 axial direction
510 system for disassembling
511 cutting tool
521 cutting region
531 tying element
541 threaded rot
542 guide nut
543 handle
544 left part
545 central part
546 right part
801 - 805 method steps

## Claims

1. A method for disassembling a tensioning system (320) from a bearing (200) of a wind turbine (100), the tensioning system (320) comprising an elongated, flexible tensioner (331), the tensioner (331) being wrapped around the bearing (200) and fixed by a retaining device (341), the method comprising:
- cutting the tensioner (331) in a cutting region (521) of the tensioner (331), and
- removing the tensioner (331) from the bearing (200).

2. The method according to the preceding claim, comprising:
- providing a first guide (355), wherein the first guide (351) is configured to hold the tensioner (331),
- attaching the first guide (355) to the bearing next to the cutting region (521).

3. The method according to claim 2, comprising:
- attaching the first guide (355) to the bearing (200) such that the cutting region (521) is between the first guide (355) and the retaining device (341).

4. The method according to claim 2 or 3, comprising
- providing a second guide (356), wherein the second guide (356) is configured to hold the tensioner (341),
- attaching the second guide (356) to the bearing (200) such that the cutting region (521) is between the first guide (355) and the second guide (356).

5. The method according to claim 4, wherein the tensioning system comprises two tensioners (331, 332) or more tensioners (331, 332, 333), comprising
- cutting all of the two or more tensioners (331, 332, 333).

6. The method according to claims 4 or 5, comprising:
- providing a third guide (357), wherein the third guide (357) is configured to hold the tensioner (331).

7. The method according to any one of claims 2 to 6, comprising:
- attaching the first guide (355) to the bearing (200) with a bolt (231) that is used for attaching the bearing (200) to a rotor hub (112) of the wind turbine (100).

8. The method according to any one of claims 2 to 7, comprising:
- attaching the first guide (355) to a reinforcement plate (311) which is fixed to the bearing (200).

9. The method according to any one of the preceding claims, wherein the tensioning system (320) comprises a plurality of elongated, flexible tensioners (331, 332, 333), the method comprising:
- determining a damage to one tensioner (331) of the plurality of tensioners (331, 332, 333),
- cutting all tensioners (331, 332, 333) of the plurality of tensioners (331, 332, 333), and
- removing all tensioners (331, 332, 333) of the plurality of tensioners (331, 332, 333) from the bearing (200).

10. The method according to any one of the preceding claims, wherein the bearing (200) is a pitch bearing, which couples a rotor blade (112) of the wind turbine (100) and a rotor hub (112) of the wind turbine (100) together, comprising:
- cutting the tensioner (331) and removing the tensioner (331) from the bearing (200) while the rotor hub (112) and the rotor blade (110) are arranged on a tower (102) of the wind turbine (100).

11. A system (510) for disassembling a tensioning system (320) from a bearing (200) of a wind turbine (100), the tensioning system (320) comprising an elongated, flexible tensioner (331), the tensioner (331) being wrapped around the bearing (200) and fixed by a retaining device (341) and comprising a cutting region (521), the system (240) comprising:
- a cutting tool (511), the cutting tool (511) being configured to cut the tensioner (331).

12. The system according to claim 11, comprising a first guide (355), the first guide (355) being configured to be attached to the bearing (200) next to a cutting region (521) and to hold the tensioner (331).

13. The system according to claim 11 or claim 12, comprising a second guide (356), the second guide (356) being configured to be attached to the bearing (200) next to the cutting region (521) and to hold the tensioner (331) such that the cutting region (521) is between the first guide (355) and the second guide (356).

14. The system according to any one of claims 11 to 13, comprising a third guide (357), the third guide (357) being configured to be attached to the bearing (200) and to hold the tensioner (331) at the bearing (200).

15. The system according to any one of claims 11 to 14, wherein the first guide (355) is configured to be attached to the bearing (200) with a bolt (231) that is used for attaching the bearing (200) to a rotor hub (112) of the wind turbine (100).
